# EUROPÄISCHE PATENTANMELDUNG

(11) **EP 0 860 253 A2**
(43) Veröffentlichungstag der Anmeldung: **26.08.1998**
(21) Anmeldenummer: 98102944.0
(22) Anmeldetag: 20.02.1998
(51) Int. Cl.: B27M 3/18, E06B 3/82

(54) **Verfahren zur Herstellung von mehrlagigen Türrohlingen und Anlage zur Durchführung des Verfahrens**

(30) Priorität: 24.02.1997 DE 19707293
(71) Anmelder: WM WILD MASCHINEN GmbH, D-33397 Rietberg (DE)
(72) Erfinder: Englisch, Hans-Joachim, 59556 Lippstadt (DE); Henkenjohann, Carsten, 33332 Gütersloh (DE); Lampe, Klaus Rüdiger, 52068 Aachen (DE); Lücking, Thomas, 33142 Büren (DE); Mansuroglu, Ali, 59329 Wadersloh (DE); Melies, Wolfgang, 33397 Rietberg (DE); Ritzenhofen, Hubertus, 32609 Hüllhorst (DE)
(74) Vertreter: Albrecht, Rainer Harald, Dr.-Ing.

(57) **Zusammenfassung**

Die Erfindung betrifft ein Verfahren zur Herstellung von mehrlagigen Türrohlingen, bei dem eine Aufteilung der Verfahrensschritte in manuell und maschinell durchgeführte Verfahrensschritte vorgenommen wird. Gegenstand der Erfindung ist ferner eine Anlage zur Durchführung des Verfahrens mit einer Arbeitsstation (1) zur Fertigung eines Türkerns bestehend aus Kernplatte und einem Rahmen aus Quer- und Längsriegeln (3, 4), einer Transporteinrichtung (6) für die Bewegung des Türkerns zu einem Legetisch (7) und einem Furniertableau (8) zum Ausrichten der Furnierblätter sowie weiteren Einrichtungen für die Zuführung von Deckschichtplatten, Stapelbildung und Verpressen der Plattenstapel zu Türrohlingen.

## Beschreibung

Die Erfindung betrifft ein Verfahren zur Herstellung von mehrlagigen Türrohlingen, die aus einem Türkern mit einer Kernplatte und mit einem Rahmen aus Quer- und Längsriegeln, beidseitig auf dem Türkern aufliegenden Deckschichtplatten und außenseiten Furnierplatten bestehen. Gegenstand der Erfindung ist ferner eine zur Durchführung des Verfahrens geeignete Anlage.

Im Hinblick auf vorwiegend als nachteilig angesehene ökonomische Gesichtspunkte, wie hohe Lohnkosten, hohe Lohnnebenkosten, kürzer werdende Arbeitszeiten und ähnliches wurde und wird beispielsweise bei der Herstellung von Produkten versucht, vollautomatische und damit von menschlichen Arbeitskräften weitgehend unabhängige Herstellungsverfahren bereitzustellen. Der anlagentechnische Aufwand vollautomatischer Verfahren zur Herstellung von Türrohlingen ist jedoch hoch und erfordert große Investitionen in Fertigungsstraßen und Herstellungsautomaten, die nur bei einer industriellen Serienfertigung von Türrohlingen in wenigen Standardgrößen und wenigen Standardausführungen wirtschaftlich rentabel betrieben werden können.

Der Markt für qualitativ hochwertige Innentüren ist durch eine zunehmende Individualisierung der Kundenwünsche geprägt, und zwar sowohl in bezug auf die verwendeten Materialien als auch in bezug auf die Türabmessungen. Eine kundenorientierte Fertigung von Türrohlingen erfordert eine variable Kommissionierung in wechselnden Losgrößen.

Der Erfindung liegt die Aufgabe zugrunde, ein Verfahren für eine hablautomatische Fertigung von Türrohlingen anzugeben, das in bezug auf die eingesetzten Materialien sowie in bezug auf die Abmessungen der Türrohlinge, insbesondere deren Breite, flexibel ist und eine hohe Produktionsleistung ermöglicht. Das Verfahren soll eine Lücke zwischen gewerblicher Einzelfertigung und industrieller Serienproduktion schließen.

Gegenstand der Erfindung und Lösung dieser Aufgabe ist ein Verfahren zur Herstellung von mehrlagigen Türrohlingen, die aus einem Türkern mit einer Kernplatte und mit einem Rahmen aus Quer- und Längsriegeln, beidseitig auf dem Türkern aufliegenden Deckschichtplatten und außenseitigen Furnierplatten bestehen, mit folgenden Verfahrensschritten:
a) Die Kernplatte und die für den Türkern benötigten Quer- und Längsriegel werden in einer Plattenzuschnittstation positioniert und in einem einzigen Trennschnitt auf Maß zugeschnitten;
b) in einer an die Zuschnittstation anschließenden Rahmenmontagestation werden die zugeschnittenen Teile manuell zu einem Türkern zusammengelegt, anschließend maschinell zusammengedrückt und die Quer- und Längsriegel an den Stößen miteinander verbunden;
c) der Türkern wird maschinell in einer Legeanlage positioniert;
d) eine Deckschichtplatte wird manuell in eine Beschickungsvorrichtung eingelegt, einer Leimauftragseinrichtung und einem Beschickungstisch zugeführt;
e) ein Furnierblatt wird auf einem Furniertableau abgelegt und manuell ausgerichtet;
f) das Furnierblatt, die Deckschichtplatte und der Türkern werden nacheinander maschinell einem Legetisch zugeführt und unter Bildung eines Stapels aufeinander abgelegt;
g) eine zweite Deckschichtplatte wird manuell in die Beschickungsvorrichtung eingelegt, der Leimauftragseinrichtung und dem Beschickungstisch zugeführt;
h) ein zweites Furnierblatt wird auf dem Furniertableau abgelegt und manuell ausgerichtet;
i) die zweite Deckschichtplatte und die zweite Furnierplatte werden nacheinander maschinell dem Legetisch zugeführt und unter Komplettierung eines Rohlings auf dem Stapel abgelegt;
j) der Rohling wird anschließend in einer Mehrkammerpresse zu einem Türrohling verpreßt.

Gemäß einer bevorzugten Ausführung der Erfindung werden jeweils zwei Rohlinge nacheinander gefertigt und gleichzeitig in der Mehrkammerpresse verpreßt. Während des Preßvorganges werden zwei Rohlinge für einen erneuten Preßvorgang vorbereitet. Die Beschickung der Mehrkammerpresse mit vorbereiteten Rohlingen und die Entnahme der fertiggepreßten Türrohlinge aus der Mehrkammerpresse erfolgt mittels eines mehretagigen Beschickungskorbes. Die den Verpreßvorgang betreffenden Verfahrensschritte sind Gegenstand der Ansprüche 2 und 3. Die Ansprüche 4 bis 6 betreffen weitere Ausgestaltungen des erfindungsgemäßen Verfahrens.

Gegenstand der Erfindung ist ferner eine Anlage zur Durchführung des Verfahrens. Zum grundsätzlichen Aufbau dieser Anlage gehören eine Arbeitsstation zur Fertigung eines Türkerns aus einer Platte und einem die Platte einfassenden Rahmen aus Quer- und Längsriegeln, eine Transporteinrichtung für die Bewegung des Türkerns zu einem Legetisch, ein Furniertableau zum Ausrichten von Furnierblättern, eine Beschickungsvorrichtung für Deckschichtplatten mit einer Leimauftragseinrichtung und einem neben dem Legetisch angeordneten Beschickungstisch, Vorrichtungen für die stapelbildende Ablage von Furnierblättern, Deckschichtplatten und des Türkerns auf dem Legetisch, eine Mehretagenpresse sowie eine Einrichtung für die Pressenbeschickung mit den auf dem Legetisch gebildeten mehrlagigen Rohlingen und für die Entnahme der verpreßten Türrohlinge. Erfindungsgemäß besteht die Arbeitsstation zur Fertigung des Türkerns aus einem Stapeltisch für Kernplatten, einem Schieber für den Vorschub einer Kernplatte auf einen an den Stapeltisch angrenzenden Auflagetisch, einer in Vorschubrichtung zwischen dem Auflagetisch und dem Stapeltisch angeordneten und quer zur Vorschubrichtung der Platten verfahrbaren Säge sowie einer Rahmenmontagestation, wobei die Rahmenmontagestation einen Arbeitstisch mit einem ein- und ausfahrbaren Anschlag und mit einer seitlichen Rahmenleiste, einen in Vorschubrichtung arbeitenden Längsschieber und einen der Rahmenleiste gegenüberliegenden Querschieber aufweist. An den Seiten des Auflagetisches sind erfindungsgemäß Führungen für den Zuschnitt der für den Türkern benötigten Querriegel und Längsriegel angeordnet, wobei die abzulängenden Enden der Quer- und Längsriegel in den Arbeitsbereich der Säge reichen. Die Arbeitsstation zur Fertigung des Türkerns, die Transporteinrichtung für den Weitertransport des Türkerns mit dem in gerader Fertigungslinie anschließenden Legetisch und das Furniertableau sind U-förmig angeordnet, wobei der Arbeitstisch der Rahmenmontagestation und das Furniertableau einen Arbeitsplatz für eine Bedienungsperson begrenzen.

Gemäß einer bevorzugten Ausführung der erfindungsgemäßen Anlage weist der Auflagetisch und der Arbeitstisch eine Plattentransporteinrichtung mit umlaufenden Fördergurten auf, wobei die von dem Schieber des Stapeltisches auf den Auflagetisch übergebenen Kernplatten auf den Fördergurten aufliegend bis zum kopfseitigen Anschlag der Rahmenmontagestation bewegbar sind. An die Plattentransporteinrichtung ist zweckmäßig eine Hubeinrichtung angeschlossen, welche nach dem Einschub einer Kernplatte in die Rahmenmontagestation die Fördergurte in der Rahmenmontagestation unter die Tischebene des Arbeitstisches absenkt. In weiterer Ausgestaltung lehrt die Erfindung, daß die Arbeitsstation zur Fertigung des Türkerns eine Wegmeßeinrichtung aufweist, die den Vorschub einer vom Stapeltisch entnommenen Kernplatte mißt und mit einer Steuerungseinrichtung verbunden ist, welche den Vorschub der Kernplatte bei Erreichen einer vorgegebenen Position stoppt. Die Führungen für die Zuschnitte der Längs- und Querriegel weisen Anschläge auf, deren Abstand zum Arbeitsbereich der Säge durch Stellspindeln, vorzugsweise rechnergesteuert und elektromotorisch angetrieben, verstellbar ist. Mit Hilfe der beschriebenen Einrichtungen werden für einen Türkern benötigte, abzulängende Querriegel und Längsriegel sowie die auf eine vorgegebene Breite zu schneidende Kernplatte in einer Plattenzuschnittstation so positioniert, daß mit Hilfe der Säge in einem einzigen Trennschnitt alle für die Montage eines Türkerns benötigten Teile in den gewünschten Abmessungen zugeschnitten werden können.

In weiterer konstruktiver Ausgestaltung lehrt die Erfindung, daß der Längsschieber der Raßmenmontagestation schwenkbewegliche Nocken als Druckelemente aufweist, die während der Vorschubbewegung einer Kernplatte in die Rahmenmontagestation unter die Tischebene des Arbeitstisches absenkbar sind, daß der Schieber bei hochgeschwenkten Nocken mit einer ersten Stellbewegung einen manuell zwischen Kernplatte und Nocken eingelegten Längsriegel gegen die Kernplatte und gegen einliegende Querriegel bewegt und nach Absenken des kopfseitigen Anschlages in einer weiteren Stellbewegung den in der Rahmenmontagestation gefertigten Türkern auf die Transporteinrichtung der Legeanlage überführt. Im Rahmen der Erfindung liegt es, den Türkern auf einem am Kopf der Arbeitsstation positionierten Wagen, der mit Zentrierungseinrichtungen ausgerüstet ist, abzulegen. Im Rahmen der Erfindung liegt es auch, die Ausschubbewegung des Türkerns auf einen Zwischentisch vorzunehmen, von dem die Übergabe auf einen Wagen der Transporteinrichtung erfolgt.

Ein platzsparender Aufbau, bei dem die Arbeitsabläufe optimiert sind, sieht vor, daß die Beschickungsvorrichtung mit der Leimauftragseinrichtung und dem Beschickungstisch eine gerade Fertigungslinie bildet, die sich parallel zu der Transporteinrichtung für die Bewegung des Türkerns erstreckt, wobei die Beschickungsvorrichtung und der von der Außenseite zugängliche Teil des Arbeitstisches der Rahmenmontagestation den Arbeitsplatz einer weiteren Bedienungsperson bilden.

Weitere Ausgestaltungen der erfindungsgemäßen Anlage sind Gegenstand der Ansprüche 14 bis 16.

Im folgenden wird die Erfindung anhand einer lediglich ein Ausführungsbeispiel darstellenden Zeichnung ausführlich erläutert. Es zeigen schematisch
- Fig. 1: eine Draufsicht auf eine Anlage zur Herstellung von Türrohlingen,
- Fig. 2: einen Ausschnitt aus der in Fig. 1 dargestellten Anlage in vergrößerter Darstellung,
- Fig. 3: eine Seitenansicht des in Fig. 2 dargestellten Anlagenteils aus der Blickrichtung A,
- Fig. 4 und 5: weitere Ausführungen der in Fig. 1 dargestellten Anlage, in der Draufsicht.

Die in den Figuren dargestellte Anlage dient der Herstellung von mehrlagigen Türrohlingen, die aus einem Türkern mit einer Kernplatte und mit einem Rahmen aus Quer- und Längsriegeln, beidseitig auf dem Türkern aufliegenden Deckschichtplatten und außenseiten Furnierblättern bestehen. Bei den Kernplatten mag es sich um Spanplatten, Röhrenspanplatten oder Mehrschichtplatten handeln. Als Deckschichtplatten kommen Hartfaserplatten, Sperrholzplatten u. dgl. in Betracht. Furnierblatt meint im Rahmen der Erfindung Holzfuniere oder Laminate.

Zum grundsätzlichen Aufbau der Anlage gehören eine Arbeitsstation 1 zur Fertigung eines Türkerns aus einer Kernplatte 2 und einem die Kernplatte 2 einfassenden Rahmen aus Querriegeln 3 und Längsriegeln 4, eine Legeanlage 5 mit einer Transporteinrichtung 6 für die Bewegung des Türkerns zu einem Legetisch 7, ein Furniertableau 8 zum Ausrichten von Furnierblättern, eine Beschickungsvorrichtung 9 für Deckschichtplatten mit einer Leimauftragseinrichtung 10 und einem neben dem Legetisch 7 angeordneten Beschickungstisch 11, Vorrichtungen für die stapelbildende Ablage von Furnierblättern, Deckschichtplatten und des Türkerns auf dem Legetisch 7, eine Mehretagenpresse 12 sowie eine Einrichtung 13 für die Pressenbeschickung mit den auf dem Legetisch 7 gebildeten mehrlagigen Rohlingen und für die Entnahme der verpreßten Türrohlinge.

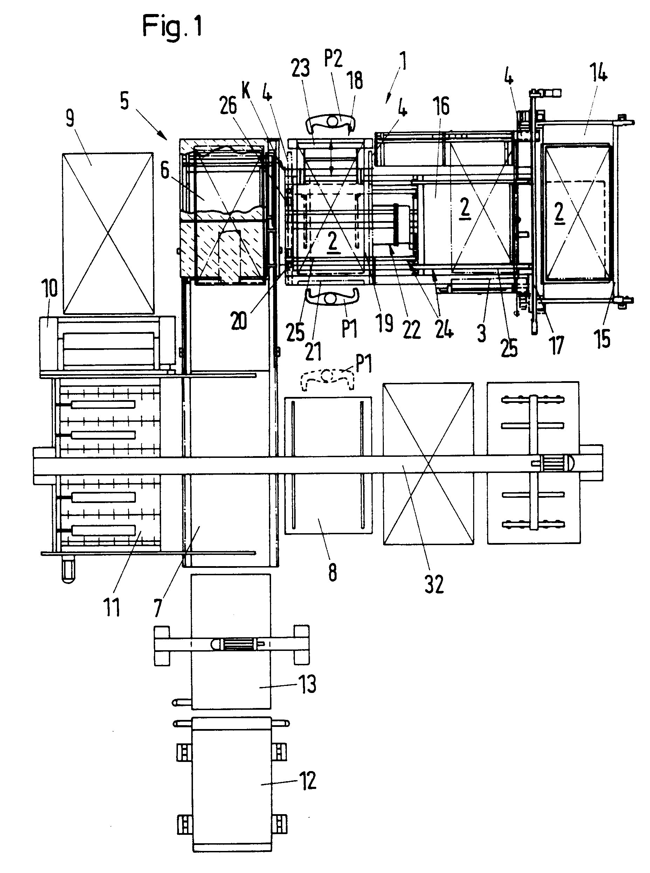

Einer vergleichenden Betrachtung der Fig. 1 bis 3 entnimmt man, daß die Arbeitsstation 1 zur Fertigung des Türkerns aus einem Stapeltisch 14 für Kernplatten, einem Schieber 15 für den Vorschub einer Kernplatte 2 auf einen an den Stapeltisch 14 angerenzenden Auflagetisch 16, einer in Vorschubrichtung zwischen dem Auflagetisch 16 und dem Stapeltisch 14 angeordneten und quer zur Vorschubrichtung der Platten 2 verfahrbaren Säge 17 sowie einer Rahmenmontagestation 18 besteht. Die Rahmenmontagestation 18 weist einen Arbeitstisch 19 mit einem in der Tischebene ein- und ausfahrbaren Anschlag 20 und mit einer seitlichen Rahmenleiste 21, einen in Vorschubrichtung arbeitenden Längsschieber 22 und einen der Rahmenleiste 21 gegenüberliegenden Querschieber 23 auf. An den Seiten des Auflagetisches 16 erkennt man Führungen für den Zuschnitt der für den Türkern benötigten Querriegel 3 und Längsriegel 4, wobei die abzulängenden Enden der Quer- und Längsriegel 3, 4 in den Arbeitsbereich der Säge 17 reichen. Die Arbeitsstation 1 zur Fertigung des Türkerns, die Transporteinrichtung 6 der Legeanlage für den Weitertransport des Türkerns mit dem in gerader Fertigungslinie anschließenden Legetisch 7 und das Furniertableau 8 sind U-förmig angeordnet, wobei der Arbeitstisch 19 der Rahmenmontagestation 18 und das Furniertableau 8 einen Arbeitsplatz für eine Bedienungsperson P1 begrenzen.

Der Auflagetisch 16 und der Arbeitstisch 19 der Rahmenmontagestation weisen eine Plattentransporteinrichtung 24 mit umlaufenden Fördergurten 25 auf, die sich im wesentlichen von der Säge 17 bis zum kopfseitigen Anschlag 20 der Rahmenmontagestation 18 erstrecken. Die von dem Schieber 15 des Stapeltisches 14 auf den Auflagetisch 16 übergebenen Kernplatten 2 sind auf den Fördergurten 25 aufliegend bis zum kopfseitigen Anschlag 20 der Rahmenmontagestation 18 bewegbar. An die Plattentransporteinrichtung 24 ist eine Hubeinrichtung 26 angeschlossen, welche nach dem Einschub einer Kernplatte 2 in die Rahmenmontagestation 18 die Fördergurte 25 in der Rahmenmontagestation 18 unter die Tischebene des Arbeitstisches 19 absenkt.

Die Arbeitsstation 1 weist ferner eine nicht dargestellte Wegmeßeinrichtung auf, die den Vorschub einer vom Stapeltisch 14 entnommenen Kernplatte (2) mißt und mit einer Steuerungseinrichtung verbunden ist, welche den Vorschub der Kernplatte 2 bei Erreichen einer vorgegebenen Position stoppt. Die Führungen für die Zuschnitte der Quer- und Längsriegel 3, 4 weisen Anschläge 28 auf, deren Abstand zum Arbeitsbereich der Säge 17 durch Stellspindeln 29, die im Ausführungsbeispiel und nach bevorzugter Ausführung der Erfindung rechnergesteuert und elektromotorisch angetrieben sind, verstellbar ist. Mit Hilfe der beschriebenen Einrichtungen werden die Kernplatte 2 und die für den Türkern benötigten Quer- und Längsriegel 3, 4 an der Säge 17 positioniert und mit einem einzigen Trennschnitt auf Maß zugeschnitten. Mit Hilfe der Plattentransporteinrichtung 24 wird die zugeschnittene Kernplatte 2 zur Rahmenmontagestation 18 weiterbewegt, in der von zwei Bedienungspersonen P1, P2 die zugeschnittenen Quer- und Längsriegel 3, 4 manuell unter Bildung einer Umrahmung der Kernplatte eingelegt werden. Anschließend werden die zu einem Türkern zusammengelegten Teile 2, 3, 4 maschinell zusammengedrückt und die Quer- und Längsriegel 3, 4 an ihren Stößen miteinander, z.B. durch Einschlagen von Klammern, verbunden.

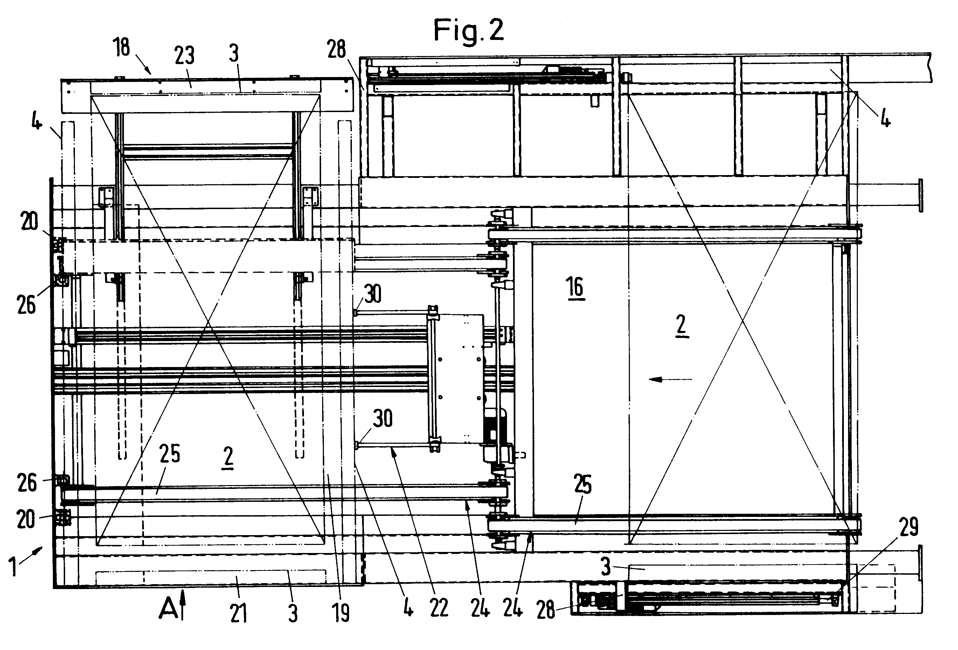

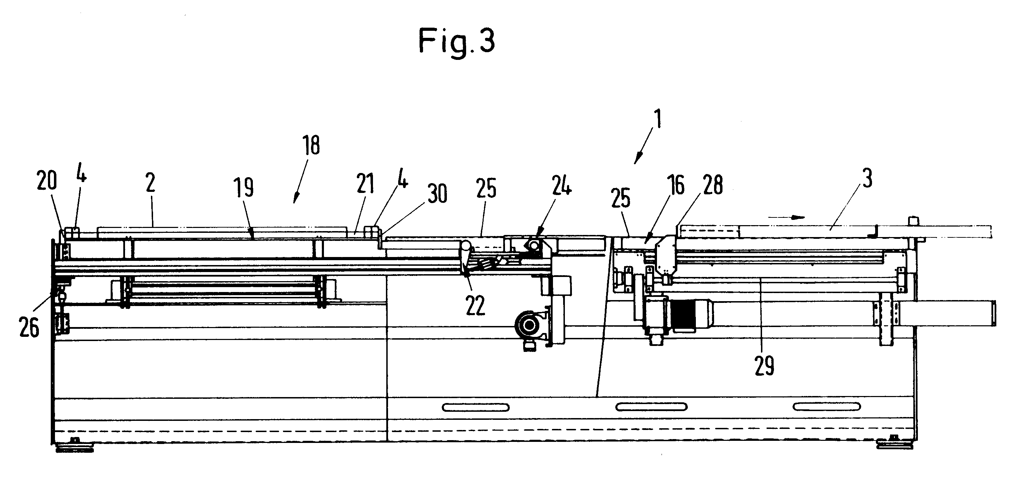

Die konstruktive Gestaltung der Rahmenmontagestation 18 ergibt sich aus einer vergleichenden Betrachtung der Fig. 2 und 3. Der Längsschieber 22 der Rahmenmontagestation 18 weist schwenkbewegliche Nocken 30 als Druckelemente auf, die während der Vorschubbewegung einer Kernplatte in die Rahmenmontagestation 18 unter die Tischebene des Arbeitstisches 19 abgesenkt sind. Nachdem die Nocken 30 hochgeschwenkt worden sind, bewegt der Längsschieber 22 mit einer ersten Stellbewegung den manuell zwischen Kernplatte 2 und Nocken 30 eingelegten Längsriegel 4 gegen die Kernplatte 2 sowie die einliegenden und mittels des Querschiebers 23 angeschobenen Querriegel 3. Nach Absenken des kopfseitigen Anschlages 20 überführt der Längsschieber 22 dann in einer weiteren Stellbewegung den in der Rahmenmontagestation 18 gefertigten Türkern auf die Transporteinrichtung 6 der Legeanlage.

Der Draufsicht in Fig. 1 entnimmt man, daß die Beschickungsvorrichtung 9 für Deckschichtplatten mit Leimauftragseinrichtung 10 und dem Beschickungstisch 11 eine gerade Fertigungslinie bildet, die sich parallel zu der Transporteinrichtung 6 für die Bewegung des Türkerns erstreckt. Die Beschickungsvorrichtung 9 und der von der Außenseite zugängliche Teil des Arbeitstisches 19 der Rahmenmontagestation bilden den Arbeitsplatz einer weiteren Bedienungsperson P2.

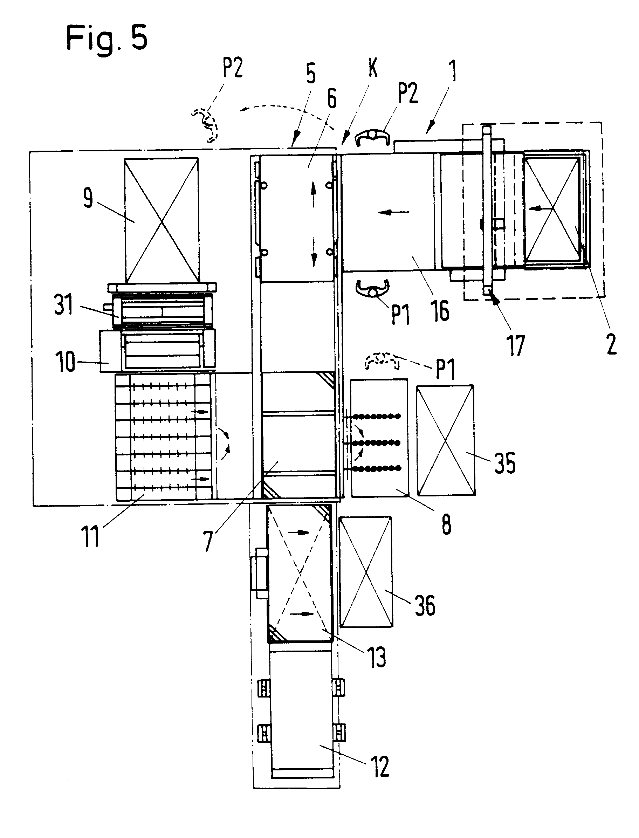

Der Leimauftragseinrichtung 10 kann eine (nur in Fig. 5 dargestellte) Reinigungsvorrichtung 31 vorgeschaltet sein. Ferner ist ein Portalstapler 32 vorgesehen, der den Legetisch 7 und das Furniertableau 8 überspannt. Die Einrichtung 13 für die Pressenbeschichtung und die Entnahme der gepreßten Türrohlinge weist einen vertikal verfahrbaren Korb mit zwei Etagen zum Beschicken und zwei Etagen zur Aufnahme fertiggepreßter Türrohlinge auf und ist zwischen der Mehretagenpresse 12 und dem Legetisch 7 angeordnet.

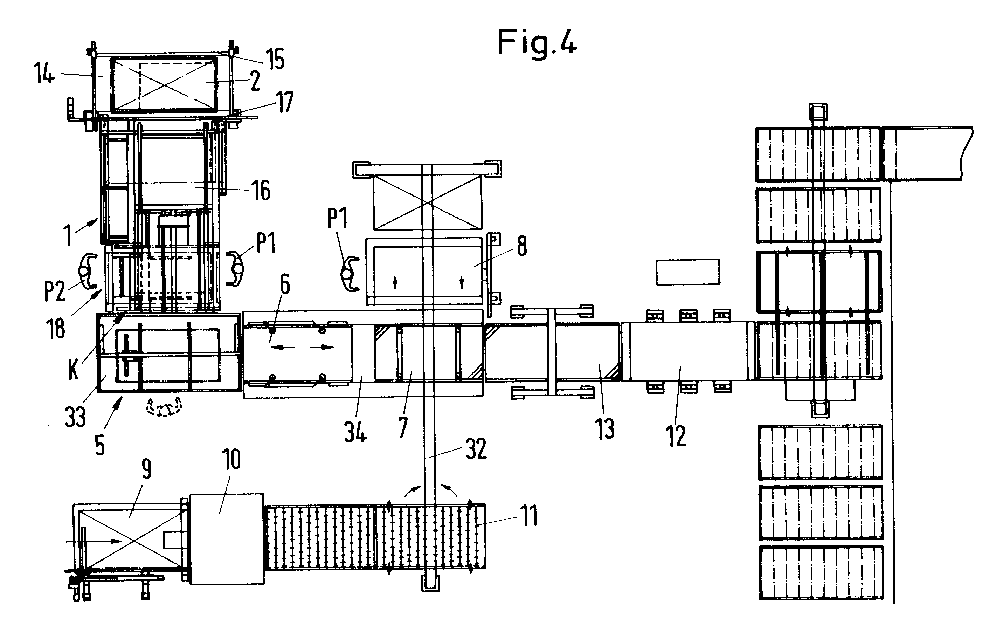

Bei der in Fig. 1 dargestellten Ausführung der Anlage wird der Türkern mittels des Schiebers der Rahmenmontagestation unmittelbar auf einen Transportwagen aufgeschoben und auf diesem durch hochschwenkbare Knaggen zentriert. Bei der in Fig. 4 dargestellten Ausführung der Anlage erfolgt die Übergabe des Türkerns zunächst auf einen Zwischentisch 33 von dem aus der Türkern in Transportrichtung auf einen Wagen der Transporteinrichtung 6 überführt wird. Ferner ist in der Transportbahn der Transporteinrichtung ein Paßstück 34 eingesetzt, welches als Platzhalter z.B. das Nachrüsten mit einer Rolle für Kaschierungspapier ermöglicht.

Im folgenden wird das erfindungsgemäße Verfahren erläutert. Auf dem Stapeltisch 14 der Plattenzuschnittstation werden Kernplatten 2 vorgegebener Höhe, beliebiger Breite und vorgegebener Dicke aufgelegt. Je nach dem zu fertigenden Türkern wird eine gewisse Plattenbreite vorgegeben. Mittels des Schiebers 15 wird die jeweilige Kernplatte zur Säge 17 vorgeschoben, die einen Teil der Plattenzuschnittstation bildet. Die gewünschte Türbreite wird gesägt. Die Säge 17 hat die zusätzliche Aufgabe, Rahmenhölzer (Quer- und Längsriegel), die für die Türrohlingsfertigung gebraucht werden, zuzuschneiden. In einem Bereich, der in Plattenlauflängsrichtung gesehen hinter der Säge liegt, arbeiten zwei Personen P1 und P2. In diesem Bereich liegen eine vorbereitete mittels der Säge zugeschnittene Kernplatte 2 sowie gesägte Längs- und Querriegel 3, 4 vor. Die Person P1 gibt einen Querriegel 3 zur Person P2, da die Querriegel 3 auf der Seite der Person P1 abgelegt sind. Die Person P1 positioniert einen (ggf. zwei) Querriegel 3. Die Person P2 positioniert einen Längsriegel 4 und den von der Person P1 überreichten Querriegel 3 auf der in der Zeichnung mit K bezeichneten Kopfseite.

Die Plattentransporteinrichtung bewegt die zugeschnittene Kernplatte 2 zur Rahmenmontagestation 18, die eine Rahmenpresse mit Quer- und Längsschieber 23, 22 aufweist. Der Längsschieber 22 wird um etwa 100 mm gegenüber der Plattenkante der Kernplatte 2 zurückgezogen, damit der zweite Längsriegel 4 angelegt werden kann. Dann drückt die Rahmenpresse die Riegel 3, 4 an die Kernplatte 2. Zum Abschluß werden die Riegel 3, 4 fixiert (z.B. festgetuckert).

In dem durch die strichpunktierte Linie umgrenzten Bereich befindet sich eine Legeanlage 5. Mit dem Längsschieber 22 der Rahmenmontagestation 18 wird nach dem Öffnen des Anschlages 20 der Türkern in den Bereich der Legeanlage 5 verschoben. Dann werden die zuvor erläuterten Schritte mit den Personen P1 und P2 nochmals durchgeführt. Dann geht die Person P2 zu der Beschickungsvorrichtung 9(symbolisiert durch die gestrichelte Darstellung der Person P2) und legt eine Hartfaserplatte ein. Die Hartfaserplatte wird bei der dargestellten besonders bevorzugten Ausführungsform zu der Reinigungsvorrichtung 31 (die beispielsweise aus Bürsten besteht) und dann zu der Leimauftragsmaschine 10 (manuell oder als Option auch maschinell) transportiert.

Die Person P1 nimmt daraufhin vom Furnierstapel 35 ein Furnierblatt und positioniert dieses mittig auf dem Tisch 8, auch als Furniertableau bezeichnet, an einer Kante. Hierbei können ggf. Risse und sonstige Fehler durch eine Ausrichtung an der Maserung des Furnierblattes eliminiert werden. Da das Furnierblatt üblicherweise Überbreite hat, ist eine Positionierung möglich, bei der z.B. Schäden im Randbereich durch Ausrücken eliminiert werden können, wobei zum optischen Ausrichten z.B. Laserrichtlinien oder ein leuchtender Faden verwendet werden können. In diesem Zustand weist die Furnierschichtseite auf dem Tisch 8 nach unten.

Der Portalstapler 32 saugt das Furnierblatt von oben an und legt es auf dem Legetisch 7 ab. Eine Hartfaserplatte kommt von dem Beschickungstisch 11, wird hierbei angehoben und mittels eines nicht dargestellten Wenders um 180° geschwenkt und auf das auf dem Legetisch 7 liegende Furnierblatt geklappt. Somit liegen auf dem Legetisch 7 zu dieser Zeit zwei Schichten (Furnierblatt und erste Hartfaserplatte).

Der auf dem einen Wagen 6 der Legeanlage liegende Türkern wird mittels einer Zentriereinrichtung auf dem Wagen zentriert. Der Wagen 6 fährt dann vor bis zum Legetisch 7. Der Türkern wird beim Legetisch 7 von nicht dargestellten längsseitigen Klammern ergriffen und auf dem Verbund aus Furnierblatt und Hartfaserplatte abgelegt. Dann fährt der Wagen 6 zurück.

Die Person P2 legt die nächste Hartfaserplatte in die Beschickungsvorrichtung 9 der Legeanlage ein, während die Person P1 ein weiteres Furnierblatt auf den Tisch 8 legt, wobei die Furniersichtseite dieses Mal jedoch nach oben weist.

Die von der Beschickungsvorrichtung 9 zum Beschickungstisch 11 transportierte zweite Hartfaserplatte wird diesmal nicht gewendet, sondern nur vom Beschickungstisch 11 zum Legetisch 7 geschoben. Der Legetisch 7 hat eine ebenfalls nicht näher dargestellte Zentriereinrichtung und schwenkbare Abstreifer, die die zweite Hartfaserplatte vom Verschiebewagen bei dessen Rückbewegung vom Legetisch 7 zum Beschickungstisch 11 abstreift und damit auf den Stapel ablegt. In diesem Zustand sind vier Schichten auf dem Legetisch 7 angeordnet.

Der Portalstapler 32 saugt das zweite Furnierblatt vom Tisch 8 und legt es auf dem auf dem Legetisch 7 liegenden Stapel ab, so daß zu diesem Zeitpunkt auf dem Legetisch 7 fünf noch nicht verpreßte Schichten liegen. Hierbei sind die Hartfaserplatten jeweils zuvor beleimt worden.

Die Pressenlinie weist einen Pressenbeschick- und Entnahmekorb 13 auf. Der Korb hat zwei Etagen zum Beschicken der Mehretagenpresse 12.

Nachdem ein zweiter Rohling bestehend aus fünf Schichten wie zuvor beschrieben vorbereitet und in den Korb 13 transportiert worden ist, werden mit einem Transportband die beiden Rohlinge in zwei Etagen der Presse 12 transportiert. Danach werden zwei weitere Rohlinge wie zuvor beschrieben vorbereitet, während in dieser Zeit die beiden ersten Rohlinge verpreßt werden. Die verpreßten Türrohlinge werden zurück zum Korb 13 in dessen untere Etagen transportiert, wobei diese unteren Etagen vorzugsweise Rollen aufweisen, damit die Türrohlinge nach dem Verpreßvorgang abkühlen können.

Dann werden die Türrohlinge auf den Legetisch 7 zurückgefahren, von wo aus sie auf die Position 36 mit der Saug- und Hebvorrichtung bzw. dem Portalstapler 32 abgestapelt werden.

Bei der in Fig. 5 dargestellten Ausführung der Erfindung ist kein Portalstapler vorgesehen. Das Furniertableau 8 weist bei dieser Ausführung eine Saug- und Wendevorrichtung auf. Der Saugwender des Furniertableaus 8 saugt das Furnier von unten an und schwenkt es um 180° auf den Legetisch 7. Der Pressenbeschick- und Entnahmekorb 13 hat zwei Etagen zum Beschicken der Mehretagenpresse 12 und zwei Etagen zum Leeren der Mehretagenpresse 12. Ferner weist er einen zusätzlichen Schieber zum Stapelbilden auf, dessen Stellbewegung in Fig. 5 durch Pfeile dargestellt ist. Die fertiggepreßten Türrohlinge werden mittels des Schiebers auf einem Rohrgestell stapelbildend abgelegt.

Die erfindungsgemäßen Anlagen wurden anhand des Beispiels der Herstellung von fünflagigen Türrohlingen beschrieben. Es versteht sich für den Fachmann, daß die erfindungsgemäße Anlage auch zur Herstellung von Türrohlingen eingesetzt werden kann, die mehr oder weniger Lagen als die beispielhaft beschriebenen fünf Lagen aufweist.

Ergänzend ist zu sagen, daß sich beim Vorsehen eines Wendemechanismusses in der Station 11 der Vorteil ergibt, daß die Hartfaserplattenbearbeitung (-Beleimung) besser gesteuert werden kann. Die Hartfaserplatten haben üblicherweise eine Gutseite (die immer zum Funier gerichtet ist) und können mit unterschiedlichen Leimaufträgen beschichtet werden, wobei z.B. furnierseitig immer ein geringerer Leimauftrag erfolgt. Ferner ist es grundsätzlich auch möglich, je nach herzustellendem Teil eine oder beide Seiten der Hartfaserplatte oder einer anderen in dieser Station zu bearbeitenden Platte mit einem Leimauftrag gleicher oder unterschiedlicher Dicke und/oder Konsistenz zu versehen. Hartfaserplatten werden je nach Bedarf, ob fünffach oder dreifach gelegt wird, doppelseitig oder einseitig beleimt.

## Patentansprüche

1. Verfahren zur Herstellung von mehrlagigen Türrohlingen, die aus einem Türkern mit einer Kernplatte und mit einem Rahmen aus Quer- und Längsriegeln, beidseitig auf dem Türkern aufliegenden Deckschichtplatten und außenseiten Furnierplatten bestehen, wobei
a) die Kernplatte und die für den Türkern benötigten Quer- und Längsriegel in einer Plattenzuschnittstation positioniert und in einem Trennschnitt auf Maß zugeschnitten werden,
b) in einer an die Zuschnittstation anschließenden Rahmenmontagestation die zugeschnittenen Teile manuell zu einem Türkern zusammengelegt, anschließend maschinell zusammengedrückt und die Quer- und Längsriegel an den Stößen miteinander verbunden werden,
c) der Türkern maschinell in einer Legeanlage positioniert wird,
d) eine Deckschichtplatte manuell in eine Beschickungsvorrichtung eingelegt, einer Leimauftragseinrichtung und einem Beschickungstisch zugeführt wird,
e) ein Furnierblatt auf einem Furniertableau abgelegt und manuell ausgerichtet wird,
f) das Furnierblatt, die Deckschichtplatte und der Türkern nacheinander maschinell einem Legetisch zugeführt und unter Bildung eines Stapels aufeinander abgelegt werden,
g) eine zweite Deckschichtplatte manuell in die Beschickungsvorrichtung eingelegt, der Leimauftragseinrichtung und dem Beschickungstisch zugeführt wird,
h) ein zweites Furnierblatt auf dem Furniertableau abgelegt und manuell ausgerichtet wird,
i) die zweite Deckschichtplatte und die zweite Furnierplatte nacheinander maschinell dem Legetisch zugeführt und unter Komplettierung eines Rohlings auf dem Stapel abgelegt werden und
j) der Rohling anschließend in einer Mehrkammerpresse zu einem Türrohling verpreßt wird.

2. Verfahren nach Anspruch 1, wobei
k) der mehrlagige Rohling maschinell in einen mehretagigen Beschickungskorb transportiert wird,
l) ein zweiter Rohling durch Wiederholung der Verfahrensschritte a) bis i) hergestellt und ebenfalls dem Beschickungskorb zugeführt wird,
m) die im Beschickungskorb enthaltenen Rohlinge maschinell in die Mehrkammerpresse transportiert und gleichzeitig verpreßt werden, während zwei weitere Rohrlinge hergestellt und dem Beschickungskorb zugeführt werden.

3. Verfahren nach Anspruch 2, wobei die in der Mehrkammerpresse fertiggepreßten Türrohlinge in den Beschickungskorb zurücktransportiert und anschließend maschinell abgestapelt werden.

4. Verfahren nach Anspruch 3, wobei vor dem maschinellen Abstapeln der Rohlinge die verpreßten Rohlinge vom Beschickkorb zum Legetisch transportiert werden.

5. Verfahren nach einem der Ansprüche 1 bis 4, wobei vor dem Verleimen der Deckschichtplatten ein Reinigungsschritt durchgeführt wird.

6. Verfahren nach einem der Ansprüche 1 bis 5, wobei der Türkern in der Legeanlage vor dem Transport zum Legetisch zentriert wird.

7. Anlage zum Herstellen von mehrlagigen Türrohlingen mit
einer Arbeitsstation (1) zur Fertigung eines Türkerns aus einer Kernplatte und einem die Kernplatte einfassenden Rahmen aus Quer- und Längsriegeln (3, 4),
einer Transporteinrichtung (6) für die Bewegung des Türkerns zu einem Legetisch (7),
einem Furniertableau zum Ausrichten von Furnierblättern,
einer Beschickungsvorrichtung (9) für Deckschichtplatten mit einer Leimauftragseinrichtung (10) und einem neben dem Legetisch (7) angeordneten Beschickungstisch (11),
Vorrichtungen für die stapelbildende Ablage von Furnierblättern, Deckschichtplatten und des Türkerns auf dem Legetisch (7),
einer Mehretagenpresse 12 sowie
einer Einrichtung (13) für die Pressenbeschickung mit den auf dem Legetisch (7) gebildeten mehrlagigen Rohlingen und für die Entnahme der verpreßten Türrohlinge, **dadurch gekennzeichnet**, daß die Arbeitsstation (1) zur Fertigung des Türkerns aus einem Stapeltisch (14) für Kernplatten, einem Schieber (15) für den Vorschub einer Kernplatte (2) auf einen an den Stapeltisch (14) angrenzenden Auflagetisch (16), einer in Vorschubrichtung zwischen dem Auflagetisch (16) und dem Stapeltisch (14) angeordneten und quer zur Vorschubrichtung der Kernplatten verfahrbaren Säge (17) sowie einer Rahmenmontagestation besteht (18),
wobei die Rahmenmontagestation (18) einen Arbeitstisch (19) mit einem ein- und ausfahrbaren Anschlag (20) und mit einer seitlichen Rahmenleiste (21), einen in Vorschubrichtung arbeitenden Längsschieber (22) und einen der Rahmenleiste (21) gegenüberliegenden Querschieber (23) aufweist,
daß an den Seiten des Auflagetisches (16) Führungen für den Zuschnitt der für den Türkern benötigten Querriegel (3) und Längsriegel (4) angeordnet sind, wobei die abzulängenden Enden der Quer- und Längsriegel (3, 4) in den Arbeitsbereich der Säge (17) reichen, und daß die Arbeitsstation (1) zur Fertigung des Türkerns, die Transporteinrichtung (6) für den Weitertransport des Türkerns mit dem in gerader Fertigungslinie anschließenden Legetisch (7) und das Furniertableau (8) U-förmig angeordnet sind, wobei der Arbeitstisch (19) der Rahmenmontagestation und das Furniertableau (8) einen Arbeitsplatz für eine Bedienungsperson (P1) begrenzen.

8. Anlage nach Anspruch 7, dadurch gekennzeichnet, daß der Auflagetisch (16) und der Arbeitstisch (19) der Rahmenmontagestation eine Plattentransporteinrichtung mit (24) umlaufenden Fördergurten (25) aufweisen, wobei die von dem Schieber (15) des Stapeltisches (14) auf den Auflagetisch (16) übergebenen Kernplatten (2) auf den Fördergurten (25) aufliegend bis zum kopfseitigen Anschlag (20) der Rahmenmontagestation (18) bewegbar sind.

9. Anlage nach Anspruch 7, dadurch gekennzeichnet, daß an die Plattentransporteinrichtung (24) eine Hubeinrichtung (26) angeschlossen ist, welche nach dem Einschub einer Kernplatte (2) in die Rahmenmontagestation (18) die Fördergurte (25) in der Rahmenmontagestation (18) unter die Tischebene des Arbeitstisches (19) absenkt.

10. Anlage nach einem der Ansprüche 7 bis 9, dadurch gekennzeichnet, daß die Arbeitsstation (1) zur Fertigung des Türkerns eine Wegmeßeinrichtung aufweist, die den Vorschub einer vom Stapeltisch (14) entnommenen Kernplatte (2) mißt und mit einer Steuerungseinrichtung verbunden ist, welche den Vorschub der Kernplatte (2) bei Erreichen einer vorgegebenen Position stoppt.

11. Anlage nach einem der Ansprüche 7 bis 10, dadurch gekennzeichnet, daß die Führungen für die Zuschnitte der Quer- und Längsriegel (3, 4) Anschläge (28) aufweisen, deren Abstand zum Arbeitsbereich der Säge (17) durch Stellspindeln (29), vorzugsweise rechnergesteuert und elektromotorisch angetrieben, verstellbar ist.

12. Anlage nach einem der Ansprüche 7 bis 11, dadurch gekennzeichnet, daß der Längsschieber (22) der Rahmenmontagestation (18) schwenkbewegliche Nocken (30) als Druckelemente aufweist, die während der Vorschubbewegung einer Kernplatte (2) in die Rahmenmontagestation (18) unter die Tischebene des Arbeittisches (19) absenkbar sind, daß der Längsschieber (22) bei hochgeschwenkten Nocken (30) mit einer ersten Stellbewegung einen manuell zwischen Kernplatte (2) und Nocken (30) eingelegten Längsriegel (4) gegen die Kernplatte (2) und gegen einliegende Querriegel (3) bewegt und nach Absenken des kopfseitigen Anschlages (20) in einer weiteren Stellbewegung den in der Rahmenmontagestation (18) gefertigten Türkern auf die Transporteinrichtung (6) überführt.

13. Anlage nach einem der Ansprüche 7 bis 12, dadurch gekennzeichnet, daß die Beschickungsvorrichtung (9) mit der Leimauftragseinrichtung und dem Beschickungstisch (11) eine gerade Fertigungslinie bildet, die sich parallel zu der Transporteinrichtung (6) für die Bewegung des Türkerns erstreckt, wobei die Beschickungsvorrichtung (9) und der von der Außenseite zugängliche Teil des Arbeitstisches (19) der Rahmenmontagestation den Arbeitsplatz einer weiteren Bedienungsperson (P2) bilden.

14. Anlage nach einem der Ansprüche 7 bis 13, dadurch gekennzeichnet, daß der Leimauftragseinrichtung (10) eine Reinigungsvorrichtung (31) vorgeschaltet ist.

15. Anlage nach einem der Ansprüche 7 bis 14, dadurch gekennzeichnet, daß ein Portalstapler (32) vorgesehen ist, der den Legetisch (7) und das Furniertableau (8) überspannt.

16. Anlage nach einem der Ansprüche 7 bis 15, dadurch gekennzeichnet, daß die Einrichtung (13) für die Pressenbeschickung und die Entnahme der gepreßten Türrohlinge einen vertikal verfahrbaren Korb mit zwei Etagen zum Beschicken und zwei Etagen zur Entnahme fertiggepreßter Türrohlinge aufweist und zwischen der Mehretagenpresse (12) und dem Legetisch (7) angeordnet ist.
